# EUROPÄISCHE PATENTANMELDUNG

(11) **EP 1 477 875 A2**
(43) Veröffentlichungstag der Anmeldung: **17.11.2004**
(21) Anmeldenummer: 04010412.7
(22) Anmeldetag: 03.05.2004
(51) Int. Cl.: G05D 23/13

(54) **Stellvorrichtung für ein Mischventil**

(30) Priorität: 12.05.2003 DE 10321388
(71) Anmelder: Grohe Water Technology AG & Co. KG, 58675 Hemer (DE)
(72) Erfinder: Frankholz, Christian, 58730 Fröndenberg (DE); Luig, Frank-Thomas, 58708 Menden (DE)

(57) **Zusammenfassung**

Bei einer Sollwerteinstellvorrichtung an einem thermostatisch geregelten Mischventil für Kalt- und Heißwasser mit einer drehbar auf einem feststehenden Halsstück (2) am Ventilgehäuse (1) angeordneten, auf eine Ventilstange (3) einwirkende Stellmutter (4), die axial festliegend von einem am Gehäuse oder am Halsstück (2) befestigten Anschlagring (5) auf dem Halsstück (2) drehbar gehalten ist, wobei die Ventilstange (3) einen Teilbereich (30) aufweist, der drehfest, aber axial verschiebbar in einer Öffnung (21) des Halsstückes (2) geführt ist, wobei der Teilbereich (30) mit einem Gewindekopf (300) aus dem Halsstück (2) axial vorsteht und mit einem Gewinde (40) in ein entsprechendes Gewinde in der Stellmutter (4) eingreift, ist vorgesehen, dass das Gewinde (40) und der Gewindekopf (300) so ausgebildet sind, dass eine axiale Abstützung des Gewindekopfes (300) an einer gegenüber liegenden Stirnseite (20) des Halsstückes (2) ausgeschlossen ist.

## Beschreibung

Die Erfindung betrifft eine Sollwerteinstellvorrichtung an einem thermostatisch geregelten Mischventil für Kalt- und Heißwasser mit einer drehbar auf einem feststehenden Halsstück am Ventilgehäuse angeordneten, auf eine Ventilstange einwirkende Stellmutter, die axial festliegend von einem am Gehäuse oder am Halsstück befestigten Anschlagring auf dem Halsstück drehbar gehalten ist, wobei die Ventilstange einen Teilbereich aufweist, der drehfest, aber axial verschiebbar in einer Öffnung des Halsstückes geführt ist, wobei der Teilbereich mit einem Gewindekopf aus dem Halsstück axial vorsteht und mit seinem Gewinde in ein entsprechendes Gewinde in der Stellmutter eingreift.

Eine derartige Sollwerteinstellvorrichtung ist in der deutschen Patentanmeldung Aktenzeichen 101 53 988.6 beschrieben. Bei dieser Ausbildung kann nicht völlig ausgeschlossen werden, dass - z. B. durch eine ungünstige Justierung des Mischventils - der Gewindekopf der Ventilstange von der Stellmutter gegen die vorstehende Stirnseite des Halsstückes gedrückt wird, so dass bei einem weiteren Drehen der Stellmutter über das in der Stellmutter vorgesehene Gewinde unzulässig hohe Axialkräfte auf den Anschlagring übertragen werden können.
Hierdurch kann nicht völlig ausgeschlossen werden, dass es zu Beschädigungen oder gar zu einem Bruch des Anschlagringes kommen kann, was zu einer Funktionsstörung oder gar zu einem Ausfall des Mischventils führen kann.

Der Erfindung liegt die Aufgabe zugrunde, die im Urbegriff des Anspruchs 1 angegebene Sollwerteinstellvorrichtung zu verbessern und insbesondere so auszubilden, dass durch ein Drehen der Stellmutter eine unzulässig hohe axiale Verspannung des Anschlagringes ausgeschlossen wird.

Diese Aufgabe wird mit einer gattungsgemäßen Sollwerteinrichtung dadurch gelöst, dass das Gewinde und der Gewindekopf so ausgebildet sind, dass eine axiale Abstützung des Gewindekopfes an einer gegenüber liegenden Stirnseite des Halsstückes ausgeschlossen ist.
Mit dieser Ausbildung wird erreicht, dass über das Gewinde in der Stellmutter keine unzulässig hohen Axialkräfte erzeugt und in den Anschlagring geleitet werden. Die maximal auftretenden Axialkräfte werden durch die Überlastfeder im Teilbereich der Ventilstange bestimmt.

In einer bevorzugten Ausgestaltung der Erfindung kann die Abstützung des Gewindekopfes an der Stirnseite des Halsstückes dadurch verhindert werden, dass das Gewinde der Stellmutter in der Einbaulage zu der Stirnseite des Halsstückes einen Abstand aufweist, der größer als die Länge des Gewindekopfes ist. Hierbei kann der Abstand zweckmäßig mit einer zylindrischen Aussenkung in der Stellmutter verwirklicht werden.
Eine andere Ausgestaltung der Erfindung sieht vor, dass die Öffnung in dem Halsstück für die Ventilstange im Durchmesser größer ist als der Außendurchmesser des Gewindekopfes, so dass der Gewindekopf bei einer Axialbewegung nicht an der Stirnseite des Halsstückes zur Anlage gelangen kann, sondern axial in das Halsstück eintauchen kann.

Nach einer weiteren vorteilhaften Ausgestaltung der Erfindung kann das Gewinde in der Stellmutter an der der Stirnseite des Halsstückes zugekehrten Seite von einer eindrehbare Hohlschraube gesperrt werden, so dass der Gewindekopf axial von der Hohlschraube in der Stellmutter gesichert wird und nicht mehr an der Stirnseite des Halsstückes zur Anlage gelangen kann. Unzulässig hohe Axialkräfte können somit auf den Anschlagring nicht übertragen werden. Hierbei kann die Hohlschraube in einem im Durchmesser erweiterten Bereich mittels Gewinde mit der Stellmutter, nachdem der Gewindekopf in die Stellmutter eingebracht ist, verbunden werden.

Ein Ausführungsbeispiel der Erfindung ist in der Zeichnung dargestellt und wird im Folgenden näher beschrieben. Es zeigt in der Zeichnung
- Figur 1: eine Sollwerteinstellvorrichtung im Längsschnitt, angeordnet an einem zum Teil dargestellten thermostatisch geregelten Mischventil;
- Figur 2: die in Figur 1 gezeigte Stellmutter;

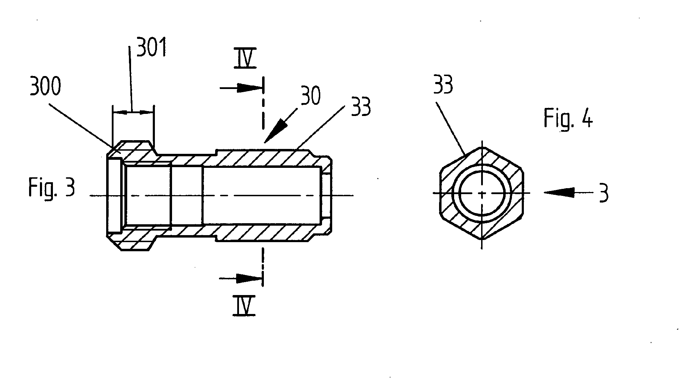

- Figur 3: den in Figur 1 gezeigten Teilbereich der Ventilstange mit dem Gewindekopf;
- Figur 4: den in Figur 3 gezeigten Teilbereich der Ventilstange in der Schnittebene IV.

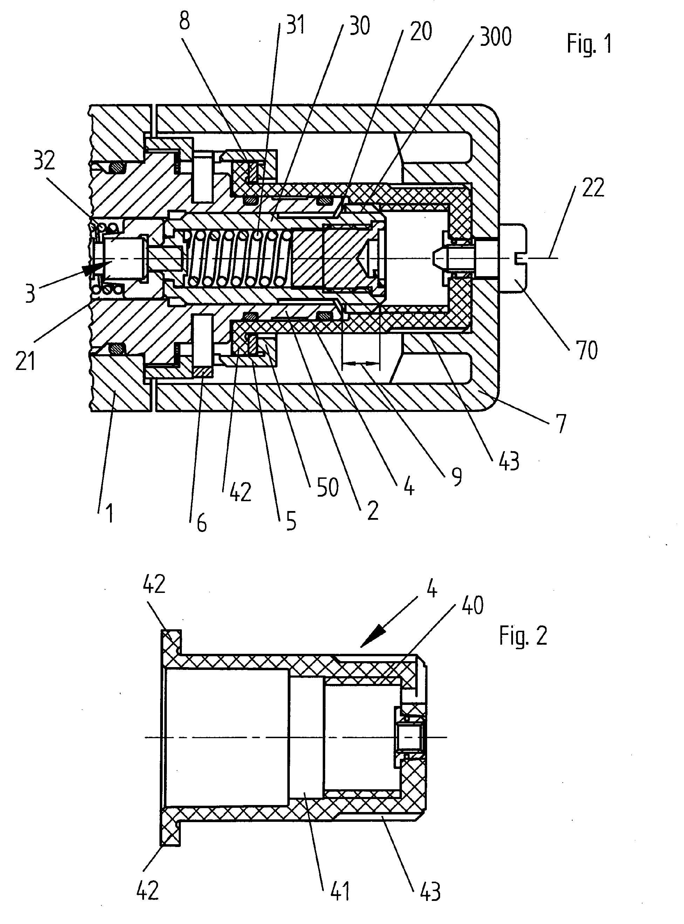

In der Zeichnung in Figur 1 ist ein zum Teil dargestelltes Ventilgehäuse 1 eines thermostatgeregelten Mischventils gezeigt. Das Ventilgehäuse 1 weist eine seitliche Öffnung auf, durch die ein als Baueinheit ausgebildetest bekanntes thermostatgeregeltes Mischventil einbringbar ist. In der Einbaulage wird die Öffnung im Ventilgehäuse 1 von einem Halsstück 2 verschlossen.
In dem Halsstück 2 ist auf einer Mittelachse 22 eine durchgehende Öffnung 21 ausgebildet, in der eine Ventilstange 3 angeordnet ist, mit der die Stellgröße auf ein in der Zeichnung nicht dargestelltes Ventilglied übertragen wird. Die Ventilstange 3 wird von einer Rückstellfeder 32 in Richtung auf eine Stellmutter 4 gedrückt. Die Ventilstange 3 weist hierbei einen hülsenförmigen Teilbereich 30 auf, in dem eine Überlasteinrichtung mit einer Überlastfeder 31 angeordnet ist. Der Teilbereich 30 der Ventilstange wird mit einem Sechskant 33 drehfest, aber axial verschieblich, in dem Halsstück 2 geführt und steht mit einem Gewindekopf 300 aus dem Halsstück 2 vor.

Auf dem Halsstück 2 ist konzentrisch ein Anschlagring 5 drehfest angeordnet und mit einer Riegelspange 6 axial in der Stecklage gesichert. Der Anschlagring 5 weist an der zum Ventilgehäuse 1 vorstehenden Stirnseite einen nach innen gerichteten Ringflansch 50 auf, der mit einem entsprechenden Außenflansch 42 der Stellmutter, unter Zwischenlage eines Gleitringes 8, ein Axiallager für die Stellmutter 4 bildet. Im Innern der hülsenförmigen Stellmutter 4 ist ein Gewinde 40 ausgebildet, das mit einem entsprechenden Gewinde am Außenmantel des Gewindekopfes 300 in Eingriff bringbar ist. Am Außenmantel der Stellmutter 4 ist eine Verzahnung 43 ausgebildet, auf der eine Griffhaube 7 mit einer entsprechenden Verzahnung aufschiebbar und in der Stecklage mit einer Schraube 70 axial sicherbar ist. Die Griffhaube 7 ist somit drehfest mit der Stellmutter 4 verbunden. Durch eine Drehbewegung der Griffhaube 7 um die Mittelachse 22 kann über das Gewinde 40 der Stellmutter 4 die Ventilstange 3 axial bewegt und die erforderliche Stellgröße für das Mischventilglied erzeugt werden.
In der in Figur 1 gezeigten Stellung befindet sich der Gewindekopf 300 außerhalb des Eingriffes zu dem Gewinde 40 der Stellmutter 4, so dass in dieser Position der Gewindekopf 300 durch eine Drehbewegung der Griffhaube 7 nicht gegen die vorstehende Stirnfläche 20 des Halsstückes 2 gepresst werden kann bzw. von der Stirnfläche 20 keine Abstützung erfährt. Es können somit keine unzulässig hohen Axialkräfte auf den Anschlagring 5 gelenkt werden, da das Gewinde 40 in der Einbaulage einen Abstand 9 zur Stirnfläche 20 aufweist, der größer ist als die Länge 301 des Gewindekopfes 300. Damit das Gewinde des Gewindekopfes 300 außer Eingriff zu der Stellmutter 4 gelangt, ist in der Stellmutter eine zylindrische Aussenkung 41 vorgesehen, die einen größeren Durchmesser aufweist als der Außendurchmesser des Gewindekopfes 300. Hierbei wird der Gewindekopf 300 von der Überlastfeder 31 und/oder der Rückstellfeder 32 in Richtung des Gewindes 40 der Stellmutter 4 gedrückt. Es ist somit sichergestellt, dass bei einer Änderung der Drehrichtung der Griffhaube 7 der Gewindekopf 300 in das Gewinde 40 der Stellmutter 4 wieder eingedreht wird.

Alternativ kann auch die Stellmutter 4 von der Stirnseite des Außenflansches 42 eine durchgehende zylindrische Aussenkung bis zum Beginn des Gewindes 40 aufweisen.

## Patentansprüche

1. Sollwerteinstellvorrichtung an einem thermostatisch geregelten Mischventil für Kalt- und Heißwasser mit einer drehbar auf einem feststehenden Halsstück (2) am Ventilgehäuse (1) angeordneten, auf eine Ventilstange (3) einwirkende Stellmutter (4), die axial festliegend von einem am Gehäuse oder am Halsstück (2) befestigten Anschlagring (5) auf dem Halsstück (2) drehbar gehalten ist, wobei die Ventilstange (3) einen Teilbereich (30) aufweist, der drehfest, aber axial verschiebbar in einer Öffnung des Halsstückes (2) geführt ist, wobei der Teilbereich (30) mit einem Gewindekopf (300) aus dem Halsstück (2) axial vorsteht und mit seinem Gewinde (40) in ein entsprechendes Gewinde in der Stellmutter (4) eingreift, **dadurch gekennzeichnet, dass** das Gewinde (40) und der Gewindekopf (300) so ausgebildet sind, dass eine axiale Abstützung des Gewindekopfes (300) an einer gegenüber liegenden Stirnseite (20) des Hals stückes (2) ausgeschlossen ist.

2. Sollwerteinstellvorrichtung nach Anspruch 1, **dadurch gekennzeichnet, dass** das Gewinde (40) in der Stellmutter (4) mit einem Abstand (9) zum Halsstück (2) endet, welcher wenigstens der Länge (301) des Gewindekopfes (300) entspricht.

3. Sollwerteinstellvorrichtung nach Anspruch 2, **dadurch gekennzeichnet, dass** der Abstand (9) als eine Aussenkung (41) im Gewinde (40) der Stellmutter (4) ausgebildet ist, deren Durchmesser größer als der Außendurchmesser des Gewindekopfes (300) ist.

4. Sollwerteinstellvorrichtung nach Anspruch 1, **dadurch gekennzeichnet, dass** der Außendurchmesser des Gewindekopfes kleiner als der lichte Durchmesser der Öffnung im Halsstück ist.

5. Sollwerteinstellvorrichtung nach Anspruch 1, **dadurch gekennzeichnet, dass** der der Stirnseite des Halsstückes zugekehrte Bereich des Gewindes in der Stellmutter von einer Hohlschraube sperrbar ist.
